(19) Europäisches Patentamt
European Patent Office
Office européen des brevets

(11) EP 1 506 249 B1

(12) **EUROPEAN PATENT SPECIFICATION**

(45) Date of publication and mention of the grant of the patent:
**30.05.2007 Bulletin 2007/22**

(21) Application number: **03714492.0**

(22) Date of filing: **02.04.2003**

(51) Int Cl.:
***C08G 64/30*** *(2006.01)* ***C08J 5/18*** *(2006.01)*
***B29C 47/04*** *(2006.01)*

(86) International application number:
**PCT/US2003/010015**

(87) International publication number:
**WO 2003/095521 (20.11.2003 Gazette 2003/47)**

(54) **MULTIWALL POLYCARBONATE SHEET AND METHOD FOR ITS PRODUCTION**

MEHRWANDIGE POLYCARBONATPLATTE UND IHR HERSTELLUNGSVERFAHREN

FEUILLE DE POLYCARBONATE MULTICOUCHE ET PROCEDE DE PRODUCTION DE CELLE-CI

(84) Designated Contracting States:
**AT BE BG CH CY CZ DE DK EE ES FI FR GB GR HU IE IT LI LU MC NL PT RO SE SI SK TR**

(30) Priority: **08.05.2002 US 63687**

(43) Date of publication of application:
**16.02.2005 Bulletin 2005/07**

(73) Proprietor: **GENERAL ELECTRIC COMPANY**
**Schenectady, NY 12345 (US)**

(72) Inventors:
- **Goossens, Johannes, Martinus, Dina**
  **NL-4624 HN Bergen op Zoom (NL)**
- **Kamps, Jan, Henk**
  **NL-4611 JX Bergen op Zoom (NL)**
- **Prada, Lina**
  **E-3007 Murcia (ES)**
- **Tacke-Willemsen, Augustina, Martina**
  **NL-4617 NM Bergen op Zoom (NL)**
- **Verhoogt, Hendrik**
  **NL-4617GK Bergen op Zoom (NL)**
- **Zirkzee, Hendricus, Franciscus**
  **NL-4423 AJ Schore (NL)**

(74) Representative: **Szary, Anne Catherine et al**
**London Patent Operation**
**General Electric International, Inc.**
**15 John Adam Street**
**London WC2N 6LU (GB)**

(56) References cited:
**US-B1- 6 184 335**

- **DATABASE WPI Section Ch, Week 200223 Derwent Publications Ltd., London, GB; Class A23, AN 2002-174438 XP002243791 -& JP 2001 302780 A (MITSUBISHI CHEM CORP) , 31 October 2001 (2001-10-31)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

**Description**

BACKGROUND OF INVENTION

Polycarbonate sheets and profiles are widely used in architectural applications that require lightweight, transparent structural elements. For example, polycarbonate sheets are often used as a replacement for glass in windows, skylights, and greenhouses, and polycarbonate profiles are often used for illumination glazing, especially for thin wall sections and snapfits. When insulating properties are required, it is preferred to use multiwall polycarbonate sheet, which is typically formed by extruding a molten polycarbonate composition through a die and a vacuum channel having a complicated shape corresponding to the desired channels in the final sheet. Methods for the production of multiwall sheet are described, for example, in U.S. Patent Nos. 4,707,393 to Vetter, 5,846,659 to Lower et al., and 5,972,475 to Beekman.

It is challenging to manufacture multiwall sheet because the sheet exiting the extruder must maintain the complicated shape of the die until the resin cools below its softening temperature. To ensure that the multiwall sheet does not collapse before cooling, polycarbonate resin having a high melt strength must be used. In practice, this has been achieved by using branched polycarbonates prepared by introducing branching agents into the so-called interfacial method. In the interfacial method for polycarbonate synthesis, an aqueous solution of a dihydric phenol (e.g., bisphenol-A) is combined with an organic solvent (e.g., dichloromethane) containing a carbonyl halide (e.g., phosgene). Upon mixing the immiscible organic and aqueous phases, the dihydric phenol reacts with the carbonyl halide at the phase interface. Typically, a phase transfer catalyst, such as a tertiary amine, is added to the aqueous phase to enhance the reaction rate. This method tends to produce polycarbonate that is essentially free of branching. To achieve the high melt strengths required for the production of multiwall sheet, branching agents are intentionally introduced to the reaction mixture.

The interfacial method has several inherent disadvantages. First it requires the use of phosgene as a reactant. Second it requires large amounts of an organic solvent that can create disposal challenges and environmentally undesirable volatile emissions. Third, it requires a relatively large amount of equipment and capital investment. Fourth, the polycarbonate produced by the interfacial process is prone to having inconsistent color, relatively high levels of particulates, and relatively high chlorine content that can cause corrosion of manufacturing apparatus.

Given the disadvantages of the interfacial method, it would be desirable to prepare multiwall sheet using a polycarbonate prepared by the so-called melt method. In the melt method, polycarbonates are synthesized by a transesterification reaction whereby a diester of carbonic acid (e.g., diphenyl carbonate) is condensed with a dihydric phenol (e.g., bisphenol-A). This reaction is performed without a solvent, and it is driven to completion by mixing the reactants under reduced pressure and high temperature with simultaneous distillation of the aryl alcohol (e.g., phenol) produced by the reaction. The melt technique is superior to the interfacial technique because it does not employ phosgene, it does not require a solvent, and it uses less equipment. Moreover, the polycarbonate produced by the melt process does not contain chlorine contamination from the reactants, has lower particulate levels, and has a more consistent color. However, the present inventors have found that the use of conventional melt polycarbonates in a process for multiwall sheet production causes unacceptable nonuniformities in the distribution of polycarbonate resin across the width of the multiwall sheet. Thus, there remains a need for a practical method of preparing multiwall sheet using a melt polycarbonate.

SUMMARY OF INVENTION

The above-described and other drawbacks and disadvantages of the prior art are alleviated by a method for producing a multiwall thermoplastic sheet comprising extruding a composition comprising a melt polycarbonate resin having a Fries content of 10 parts per million by weight (ppm) to 2000 ppm. Other embodiments, including a multiwall sheet prepared by the method, are described in detail below.

DETAILED DESCRIPTION

The present inventors have discovered that a multiwall thermoplastic sheet having excellent uniformity across its width may be prepared by a method comprising extruding a composition comprising a melt polycarbonate resin having a Fries content of 10 ppm to 2000 ppm.

While not wishing to be bound by any particular hypothesis, the present inventors believe that the success of their invention relates to the use of a melt polycarbonate having a finite but carefully controlled amount of branching arising from Fries rearrangement of the polycarbonate during synthesis. In the Fries rearrangement, depicted below, the carbonate linkage in a linear polycarbonate (I) is rearranged to form an intermediate Fries product (II) having an ester linkage and a free phenolic hydroxyl group. Subsequent polymerization on the free phenolic hydroxyl group by reaction of, for example, bisphenol-A (BPA) and diphenyl carbonate (DPC) in the presence of a catalyst yields a branched

polycarbonate (III).

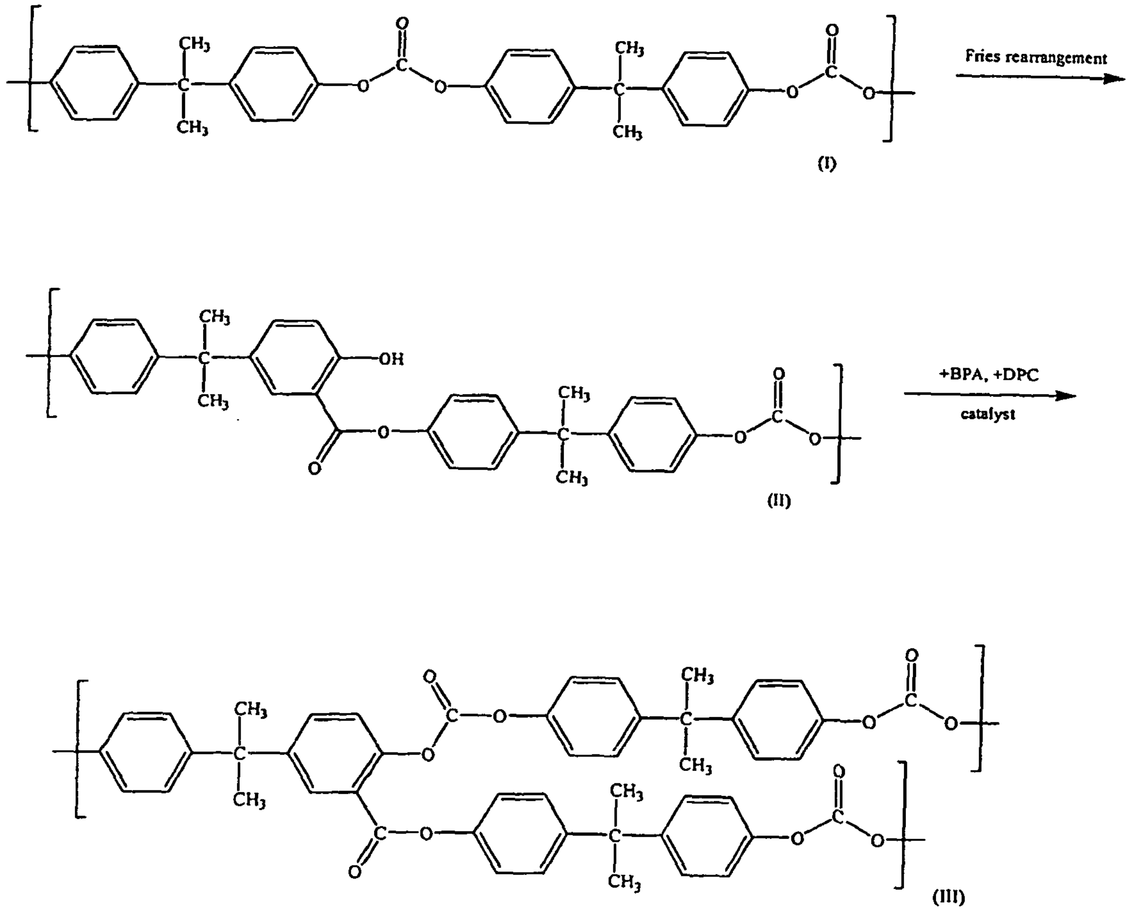


(I)

(II)

(III)

The Fries content of resulting branched polycarbonate (III) may be determined by methanolysis followed by analysis of the relative amounts of bisphenol-A (from unrearranged units) and 2-(4-hydroxybenzene)-2-(3-methylcarboxylic-4-hydroxybenzene)propane (from Fries rearranged units).

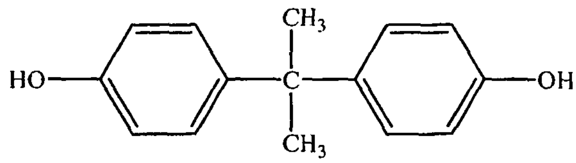

bisphenol-A

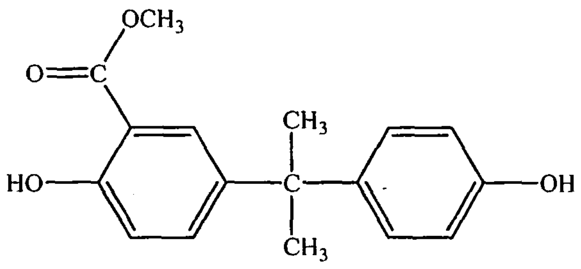

2-(4-hydroxybenzene)-2-(3-methylcarboxylic-4-hydroxybenzene)propane

The present inventors believe that the extrusion nonuniformities that occur when conventional melt polycarbonates are used to prepare multiwall sheet may be associated with the high Fries contents of these polycarbonates. In particular, the branching associated with the high Fries content causes shear thinning in the extruder that leads to more polycarbonate at the edges of the multiwall sheet than in the middle. These undesirable effects are reduced or eliminated when the method employs a melt polycarbonate having a Fries content of about 10 ppm to about 2000 ppm.

The melt polycarbonate resin is produced by the reaction of a dihydric phenol with a diester of carbonic acid. As used herein, the term "dihydric phenol" includes, for example, bisphenol compounds having the formula (IV):

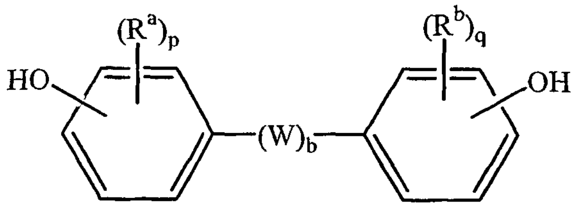

(IV)

wherein $R^a$ and $R^b$ are each independently selected from halogen, monovalent hydrocarbon, and monovalent hydrocarbonoxy radicals; W is selected from divalent hydrocarbon radicals,

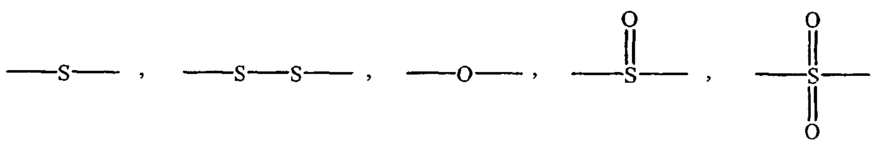

, and

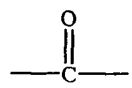

;

p and q are each independently integers of 0 to 4, and b is 0 or 1.

The monovalent hydrocarbon radicals represented by $R^a$ and $R^b$ include the alkyl, cycloalkyl, aryl, aralkyl and alkaryl radicals. The preferred alkyl radicals are those containing from 1 to about 12 carbon atoms. The preferred cycloalkyl radicals are those containing from 4 to about 8 ring carbon atoms. The preferred aryl radicals are those containing from 6 to 12 ring carbon atoms, i.e., phenyl, naphthyl, and biphenyl. The preferred alkaryl and aralkyl radicals are those containing from 7 to about 14 carbon atoms. The preferred halogen radicals represented by $R^a$ and $R^b$ are chlorine and bromine.

The divalent hydrocarbon radicals include the alkylene, alkylidene, cycloalkylene and cycloalkylidene radicals. The preferred alkylene radicals are those containing from 2 to about 30 carbon atoms. The preferred alkylidene radicals are those containing from 1 to about 30 carbon atoms. The preferred cycloalkylene and cycloalkylidene radicals are those containing from 6 to about 16 ring carbon atoms.

The monovalent hydrocarbonoxy radicals represented by $R^a$ and $R^b$ may be represented by the formula $--OR^2$ wherein $R^2$ is a monovalent hydrocarbon radical of the type described above for $R^a$ and $R^b$. Preferred monovalent hydrocarbonoxy radicals are the alkoxy and aryloxy radicals.

Suitable dihydric phenols include, but are not limited to 2,2-bis(4-hydroxyphenyl)propane (bisphenol-A, BPA); 2,2-bis(3,5-dibromo-4-hydroxyphenyl)propane; 2,2-bis(3,5-dimethyl-4-hydroxyphenyl)propane; 1,1-bis(4-hydroxyphenyl)cyclohexane; 1,1-bis(3,5-dimethyl-4-hydroxyphenyl)cyclohexane; 1,1-bis(4-hydroxyphenyl)decane; 1,1 -bis(4-hydroxyphenyl)propane; 1,1 -bis(4-hydroxyphenyl)cyclodecane; 1,1 -bis(3,5-dimethyl-4-hydroxyphenyl)cyclododecane; 4,4-dihydroxyphenyl ether; 4,4-thiodiphenol; 4-4-dihydroxy-3,3-dichlorodiphenyl ether; 4,4-thiodiphenol; 4,4-dihydroxy-3,3-dichlorodiphenyl ether; 4,4-dihydroxy-2,5-dihydroxydiphenyl ether (BPI); 1,1-bis(4-hydroxyphenyl)-1-phenylethane; 1,1-bis(3-methyl-4-hydroxyphenyl)-1-phenylethane, and the like, and mixtures comprising at least one of the foregoing dihydric phenols. In one embodiment, the residues of dihydric phenol in the polycarbonate comprise 100 mol % of residues derived from BPA.

Optionally, polyfunctional compounds may be utilized in combination with the dihydric phenols. Suitable polyfunctional compounds used in the polymerization of branched polycarbonate include, but are not limited to, 1,1,1-tris(4-hydroxyphenyl)ethane, 4-[4-[1,1-bis(4-hydroxyphenyl)-ethyl]-dimethylbenzyl], trimellitic anhydride, trimellitic acid, their acid chloride derivatives, or combinations comprising at least one of the foregoing polyfunctional compounds.

Various compounds may be used as the diester of carbonic acid including, but not limited to diaryl carbonate compounds, dialkyl carbonate compounds and alkyl aryl carbonate compounds. Suitable diesters of carbonic acid include, but are not limited to, diphenyl carbonate; bis(4-t-butylphenyl)carbonate; bis(2,4-dichlorophenyl)carbonate; bis(2,4,6-trichlorphenyl)carbonate; bis(2-cyanophenyl)carbonate; bis(o-nitrophenyl)carbonate; ditolyl carbonate; m-cresol carbonate; dinaphthyl carbonate; bis(diphenyl)carbonate; diethylcarbonate; dimethyl carbonate; dibutyl carbonate; dicyclohexyl carbonate; and compositions comprising at least one of the foregoing diesters. Of these, diphenyl carbonate is preferred. If two or more of these compound are utilized, it is preferable that one is diphenyl carbonate.

In addition to the dihydric phenol and the diaryl carbonate, the melt polycarbonate synthesis may, optionally, employ an endcapping agent. Suitable endcapping agents include monovalent aromatic hydroxy compounds, haloformate derivatives of monovalent aromatic hydroxy compounds, monovalent carboxylic acids, halide derivatives of monovalent carboxylic acids, and compositions comprising at least one of the foregoing endcapping agents. Specific endcapping agents include, for example, phenol, p-tert-butylphenol, p-cumylphenol, p-cumylphenolcarbonate, undecanoic acid, lauric acid, stearic acid, phenyl chloroformate, t-butyl phenyl chloroformate, p-cumyl chloroformate, chroman chloroformate, octyl phenyl, nonyl phenyl chloroformate, and the like, and combinations comprising at least one of the foregoing endcapping agents. When present, the endcapping agent is preferably used in an amount of about 0.01 to about 0.20 moles per 1 mole of the dihydric phenol. Within this range, it may be preferred to use an endcapping agent amount of at least about 0.02 moles. Also within this range, it may be preferred to use an endcapping agent amount of up to about 0.15 moles, more preferably up to about 0.10 moles.

The melt polycarbonate employed in the method has a Fries content of about 10 ppm to about 2000 ppm. Within this range, it may be preferred to use a melt polycarbonate having a Fries content of at least about 50 ppm, more preferably at least about 100 ppm. Also within this range, it may be preferred to use a melt polycarbonate having a Fries content of up to about 1800 ppm. When the Fries content is greater than 2000 ppm, extrusion of the melt polycarbonate becomes increasingly difficult.

In a preferred embodiment, the melt polycarbonate has a weight average molecular weight of about 20,000 atomic mass units (AMU) to about 50,000 AMU, measured by high performance liquid chromatography (HPLC) using polycarbonate standards. Within this range, it may be preferred to use a melt polycarbonate having a weight average molecular weight of at least about 25,000 AMU, more preferably at least about 30,000 AMU. Also within this range, it may be preferred to use a melt polycarbonate having a weight average molecular weight of up to about 40,000 AMU, more preferably up to about 35,000 AMU. When the weight average molecular weight is greater than about 50,000 AMU, the melt polycarbonate may become highly viscous. In order to process highly viscous polycarbonate into sheets or profiles, high processing temperatures are required that may cause undesirable thermal degradation. When the number average molecular weight is less than about 20,000, the melt polycarbonate may become insufficiently viscous for extrusion and its melt strength may be inadequate, decreasing the strength of sheets or profiles formed.

In a preferred embodiment, the composition comprises less than about 10 ppm total halogen, more preferably less than about 5 ppm total halogen, based on the weight of the melt polycarbonate. Total halogen is herein defined as the sum of elemental fluorine, chlorine, bromine, iodine, and astatine. Such low halogen levels minimize any corrosion of manufacturing equipment in contact with the composition. In an especially preferred embodiment, the melt polycarbonate comprises less than about 10 ppm chlorine, more preferably less than about 5 ppm chlorine, based on the weight of the melt polycarbonate. The corrosivity of the melt polycarbonate can be measured by exposing metal plaques to direct surface contact with the melt polycarbonate then measuring the discoloration of the plaques according to ASTM E308. Determination of halogens in polycarbonate may be quantified by pyrolysis of the polycarbonate under controlled conditions using a furnace with separate inert and combustion zones that promote complete combustion of any organically bounded chlorine to hydrogen chloride (HCl). The HCl produced may be transferred to a coulometric titration cell, where it is titrated with silver ions ($Ag^+$) to determine the chloride concentration.

There is no particular limitation on the melt method used to prepare the melt polycarbonate, as long as it affords

a Fries content of about 10 ppm to about 2000 ppm. A suitable method of preparing the melt polycarbonate is described in, for example, U.S. Patent No. 6,228,973 to McCloskey et al. In this reference, the melt polycarbonate is prepared by oligomerization and subsequent polymerization of a dihydric phenol and a diaryl carbonate in the presence of a catalyst comprising a tetraorganophosphonium salt or derivative thereof, and an alkali and/or alkaline earth metal compound or derivative thereof.

The composition preferably comprises the melt polycarbonate in an amount of about 85 to 100 weight percent, based on the total weight of the composition. Within this range, it may be preferred to use a melt polycarbonate amount of at least about 90 weight percent, more preferably at least about 95 weight percent, yet more preferably at least about 98 weight percent, even more preferably at least about 99 weight percent. Also within this range, it may be preferred to use a melt polycarbonate amount of up to about 99.99 weight percent, more preferably up to about 99.95 weight percent, even more preferably up to about 99.9 weight percent.

The composition may, optionally, further comprise an additive. Suitable additives include heat stabilizers, epoxy compounds, ultraviolet absorbers, mold releasing agents, colorants, antistatic agents, slipping agents, anti-blocking agents, lubricants, anti-fogging agents, natural oils, synthetic oils, waxes, organic fillers, inorganic fillers, flame retardants, antioxidants, light stabilizers, and the like, as well as combinations comprising at least one of the foregoing additives.

Examples of suitable fillers include glass fibers, asbestos, carbon fibers, silica, talc, calcium carbonate, barium sulphate, siloxanes and the like, and combinations comprising at least one of the foregoing fillers. Examples of suitable heat stabilizers include triphenyl phosphite, tris-(2,6-dimethylphenyl)phosphite, tris-(mixed mono- and di-nonylphenyl) phosphite, dimethylbenzene phosphonate, tris-(2,4-di-t-butylphenyl)phosphite, trimethyl phosphate, and the like, and combinations comprising at least one of the foregoing heat stabilizers. Examples of suitable antioxidants include octadecyl-3-(3,5-di-tert-butyl-4-hydroxyphenyl)propionate, pentaerythrityl-tetrakis[3-(3,5-di-tert-butyl-4-hydroxyphenyl)propionate], and the like, and combinations comprising at least one of the foregoing antioxidants. Examples of suitable light stabilizers include 2-(2-hydroxy-5-methylphenyl)benzotriazole, 2-(2-hydroxy-5-tert-octylphenyl)-benzotriazole, 2-hydroxy-4-n-octoxy benzophenone, and the like, and combinations comprising at least one of the foregoing light stabilizers. Examples of suitable antistatic agents include glycerol monostearate, sodium stearyl sulfonate, sodium dodecylbenzenesulfonate, tetraalkyl phosphononium or ammonium salts of perfluoro-sulfonates or perfluoro sulfonamides, and the like, and combinations comprising at least one of the foregoing antistatic agents. Examples of suitable mold releasing agents include stearyl stearate, beeswax, montan wax, paraffin wax, pentaerythritol tetrastearate, low molecular weight polyolefins, and the like, and combinations comprising at least one of the foregoing mold releasing agents. Such additives may be mixed in at a suitable time during the mixing of the components for the formation of the composition. Alternatively, the additives may be premixed and added to the composition in the form of a mixture. The additives may also be first blended to form a compacted blend. The compacted blend may then be added to the composition. Additional additives are described in H. Zweifel, Ed., "Plastics Additives Handbook, 5$^{th}$ Edition, Hanser Gardner Publications, Inc., Cincinnati (2001). Suitable amounts of additives may be determined by those skilled in the art without undue experimentation.

The composition may be prepared by intimately mixing the melt polycarbonate and any optional additives. There is no particular limitation on the method of mixing the composition. In one embodiment, referred to as on-line blending, mixing is performed in an extruder connected to the melt polymerization apparatus. In another embodiment, referred to as off-line blending, mixing is performed on a compounding extruder separate from the melt polymerization apparatus.

In either on-line or off-line blending, each additive may be added separately, the additives may be added as a mixture, or one or more additives may be added in the form of a masterbatch or a compacted blend in the melt polycarbonate. Addition of additives as a compacted blend comprises mixing the additives, in the form of powders and/or liquids, then compacting the mixture into pellets. Use of a compacted blend prevents excessive dust formation during processing and reduces segregation of the additives during blending.

Off-line blending typically comprises a premixing step and a melt-mixing step. In the premixing step, the components are mixed at a temperature below the melting temperature of the polycarbonate, forming a premix. Premixing may be performed using a tumbler mixer or a ribbon blender. Alternatively, premixing may utilize a high shear mixer such as a Henschel mixer, or the like. In the melt-mixing step, the premix is melted and further mixed as a melt. On-line blending typically comprises only a melt-mixing step as described above. As such, the pre-mixing step is omitted.

In a preferred embodiment, the premixing step is omitted, and the components are added directly to the feed section of a melt mixing device (such as an extruder) via separate feed systems. In the melt-mixing step, the components may be melt kneaded in a single or twin screw extruder, and pelletized.

An important advantage of the present method is that it enables the composition to be uniformly extruded across the width of the multiwall sheet. Multiwall sheets typically comprise a plurality of widthwise repeating sections having nominally identical design and dimensions and therefore nominally identical masses per unit area. For example, a multiwall sheet may comprise 9 repeating sections. Uniformity of the extruded sheet may therefore be measured as the relative standard deviation in mass per unit area determined by measurements made on at least three nominally identical sections. It is preferred that the relative standard deviation be less than about 3%, more preferably less than

about 2%, still more preferably less than about 1.5%.

Alternatively, the extrusion uniformity may be measured as the maximum relative deviation for any section of the sheet. For example, if the aim mass per unit area is 2000 grams per meter squared ($g/m^2$), and there are three nominally identical sections of the sheet having actual masses per unit area of 2002, 1970, and 2012 $g/m^2$, the maximum relative deviation is (100)(2000-1970)/2000 = 1.5%. It is preferred that the maximum relative deviation in mass per unit area, measured over at least three sections is less than about 4%, more preferably less than about 3%, still more preferably less than about 2%.

In a preferred embodiment, the composition has a melt volume rate (MVR) of about 4 to about 6 cubic centimeters per 10 minutes ($cm^3$/10 min), measured at 300°C and 1.2 kilograms according to ISO 1133. Within this range, it may be preferred to use a melt polycarbonate having an MVR of at least about 4.5 $cm^3$/10 min. Also within this range, it may be preferred to use a melt polycarbonate having an MVR of up to about 5.5 $cm^3$/10 min.

In another preferred embodiment, the composition has a melt index ratio (MIR) of about 1.3 to about 1.7, where the melt index ratio is defined as the ratio of the melt volume rate measured at 300°C and 21.6 kilograms to the melt volume rate measured at 300°C and 2.16 kilograms. Within this range, it may be preferred to have a melt index ratio of at least about 1.35. Also within this range, it may be preferred to have a melt index ratio of up to about 1.65.

The multiwall sheets may have a mass per unit area, measured in kilograms per square meter ($kg/m^2$) of about 0.5 $kg/m^2$ to about 8 $kg/m^2$. Within this range, it may be preferred to have a multiwall sheet with a mass per unit area of greater than or equal to about 1 $kg/m^2$, more preferably greater than or equal to about 2 $kg/m^2$. Also within this range, it may be preferred to have a multiwall sheet with a mass per unit area of less than or equal to about 7 $kg/m^2$, more preferably less than or equal to about 6 $kg/m^2$. The multiwall sheets may have a thickness of about 2 to about 50 millimeters (mm). Within this range, it may be preferred to have multiwall sheets with a thickness of greater than or equal to about 4 mm. Also within this range, it may be preferred to have multiwall sheets with a thickness less than or equal to about 40 mm.

In one embodiment, the method further comprises extruding the composition through a melt filter at a temperature of about 300°C to about 350°C. Within this range, it may be preferred to extrude at a temperature greater than or equal to about 310°C, more preferably greater than or equal to about 320°C. Also within this range, it may be preferred to extrude at a temperature less than or equal to about 340°C, more preferably less than or equal to about 330°C. The melt filter may have a pore size of less than or equal to about 50 micrometers, with less than or equal to about 30 micrometers preferred, and less than or equal to about 10 micrometers more preferred.

The multiwall polycarbonate sheet may be prepared by extruding a molten polycarbonate composition through a die and a vacuum channel having a shape corresponding to the desired channels in the final sheet. There is no particular limitation on the structure or geometry of the multi-wall sheets. Methods for the production of multiwall sheet are described, for example, in U.S. Patent Nos. 4,707,393 to Vetter, 5,846,659 to Lower et al., and 5,972,475 to Beekman. In a preferred embodiment, the multiwall sheet is coextruded with a UV absorbing layer that adheres to a surface of the multiwall sheet. For example, as described in U.S. Patent No. 4,707,393 to Vetter, the multiwall sheet may be coextruded with a cover layer and a UV absorbing layer interposed between the multiwall sheet and the cover layer. Alternatively, the extruded multiwall sheet may be coated with an acrylic-based or silicone-based cover layer containing additives such as UV-absorbers for UV-protection, surfactants for anti-static or anti-dust properties, or dyes and/or pigments for visual effects.

Another embodiment is a multiwall thermoplastic sheet made by extruding a composition comprising a melt polycarbonate resin having a Fries content of about 10 to about 2000 ppm.

Another embodiment is a single layer, solid thermoplastic sheet made by extruding a composition comprising a melt polycarbonate resin having a Fries content of about 10 to about 2000 ppm. The thermoplastic sheet may have a mass per unit area of about 0.5 to about 15 $kg/m^2$. Within this range, it may be preferred to have a thermoplastic sheet with a mass per unit area of greater than or equal to about 1 $kg/m^2$, more preferably greater than or equal to about 5 $kg/m^2$. Also within this range, it may be preferred to have a thermoplastic sheet with a mass per unit area of less than or equal to about 12 $kg/m^2$, more preferably less than or equal to about 10 $kg/m^2$. The thermoplastic sheet may have a thickness of about 0.5 mm to about 15 mm. Within this range, it may be preferred to have a thermoplastic sheet with a thickness of greater than or equal to about 1 mm. Also within this range, it may be preferable to have a thermoplastic sheet with a thickness of less than or equal to about 12 mm.

The thermoplastic sheet may be coextruded with an acrylic-based or silicone-based coating containing additives, such as UV-absorbers for UV-protection, surfactants for anti-static or anti-dust properties, or dyes and/or pigments for visual effects. The coating adheres to the surface of the thermoplastic sheet.

The invention is further illustrated by the following non-limiting examples.

EXAMPLE 1, COMPARATIVE EXAMPLES 1 AND 2

Three compositions were prepared. Comparative Example 1 used a polycarbonate produced by interfacial

synthesis. Comparative Example 2 used a melt polycarbonate having greater than 2000 ppm Fries content, and Example 1 used a melt polycarbonate having less than 2000 ppm Fries content. Each composition included the processing agent pentaerythritol tetrastearate (PETS) and the phosphite heat stabilizer tris(2,4-di-tert-butylphenyl) phosphite obtained as IRGAFOS® 168. The Comparative Example 1 composition was prepared according to the off-line mixing method. Additives were mixed into a polycarbonate powder to form a concentrate, and the concentrate was then added to the polycarbonate composition by melt mixing in an extruder. The Comparative Example 2 and Example 1 compositions were prepared using the on-line method. Additives were first mixed together, and then formed into compacted pellets. The pellets were then added to the polycarbonate melt. Polycarbonate weight average molecular weight ($M_w$) was determined by high performance liquid chromatography using polycarbonate standards. Melt volume rates (MVR) were determined at the specified temperatures and masses according to ISO 1133. Melt index ratios (MIR) were then calculated using the determined MVR values and the following formula:

$$MIR = [MVR@300°C/21.6kg / MVR@300°C/2.16kg] / 10$$

Percent light transmission and haze were measured at a wavelength range from 380 to 750 nm at a sample thickness of 2.5 millimeters according to ASTM D 1003 using a Gardner XL835 colorimeter. The same equipment was used to measure Yellowness Index (YI) over the same wavelength range and at the same sample thickness according to ASTM D1925.

Fries content was measured by the KOH methanolysis of resin and is reported as parts per million (ppm). The content of Fries for each of the melt polycarbonates listed in Table 1 was determined as follows. First, 0.50 gram of polycarbonate was dissolved in 5.0 milliliters of tetrahydrofuran (containing p-terphenyl as internal standard). Next, 3.0 milliliters of 18% potassium hydroxide in methanol was added to this solution.

The resulting mixture was stirred for two hours at about 23°C. Next, 1.0 milliliter of acetic acid was added, and the mixture was stirred for 5 minutes. Potassium acetate was allowed to crystallize over 1 hour. The solid was filtered off and the resulting filtrate was analyzed by high performance liquid chromatograph using p-terphenyl as the internal standard.

Compositions and property values are shown in Table 1, below.

Table 1

| | Interfacial synthesis | Melt technique | |
|---|---|---|---|
| | Comparative Example 1 | Comparative Example 2 | Example 1 |
| Polycarbonate amount (wt%) | 99.85 | 99.8925 | 99.8925 |
| | | | |
| Polycarbonate Fries content (ppm) | <50 | 2250 | 1710 |
| Polycarbonate $M_w$ (AMU) | 30500 | 29800 | 33300 |
| PETS amount (wt%) | 0.1 | 0.1 | 0.1 |
| IRGAFOS® 168 amount (wt%) | 0.05 | 0.0075 | 0.0075 |
| | | | |
| MVR at 300°C, 1.2 kg ($cm^3$/10 min) | 5 | 6 | 4.5 |
| MVR at 300°C, 2.16 kg ($cm^3$/10 min) | 9.4 | 10.9 | 9.8 |
| MVR at 300°C, 21.6 kg ($cm^3$/10 min) | 118.7 | 166.3 | 136.7 |
| MIR | 1.26 | 1.53 | 1.39 |
| % Light Transmission | 88.5 | 87.9 | 87 |
| YI | -0.1 | -0.2 | 0.0 |
| Haze | 0.3 | 0.6 | 0.4 |

The corrosivity of the formulations was then tested. In order to mimic potential corrosion on extrusion equipment, corrosion tests on low-grade steel were performed. For these tests, two steel plaques (15 centimeters x 10 centimeters)

were cut from the same plate, and both were cleaned with acetone. One plaque was covered with 50 grams of pelletized Comparative Example 1 and wrapped in aluminum foil. The second plaque was covered with 50 grams of pelletized Example 1 and wrapped in aluminum foil. Both plaques were placed in a hot air oven and exposed to a temperature of 170°C for 15 hours and 200°C for 5 hours. Both prior to and following the heat treatments, the L, a, and b values of the steel plaques were measured according to ASTM E308. The total color shift due to corrosion can be calculated from the difference in corresponding L, a, and b values and resulting ΔE value, as can be seen in Table 2 below.

| Table 2 | | | | |
|---|---|---|---|---|
| | a | b | L | ΔE (ASTM E308) |
| Steel plaque prior to heat treatment | 0.6 | 2.1 | 61.9 | |
| Steel plaque + C. Ex. 1 exposed to heat treatment | 8.7 | 15.2 | 41.4 | 25.7 |
| Steel plaque + Example 1 exposed to heat treatment | 3.4 | 12.8 | 51.1 | 15.5 |

Corrosion of the plaques was observed as a red-brown discoloration. The plaque covered with the composition of Example 1 showed a lower ΔE value and less discoloration as compared to the plaque covered with the composition of Comparative Example 1.

Each of the formulations was then used to prepare multiwall sheets. Several manufacturing advantages were observed for the melt polycarbonate formulations, Comparative Example 2 and Example 1. Specifically, the time needed after a start-up to get an acceptable multiwall sheet, i.e., a sheet with a weight distribution within the desired specifications, is shortened when compared to the interfacial synthesis formulation, Comparative Example 1.

Table 3 shows the masses per unit area of sections of a 210 centimeter (cm) wide multiwall sheet with a target mass of 2700 grams per meter squared ($g/m^2$). The mass per unit area of each section is calculated by the mass of each section divided by the product of the length and the width of the section. For each formulation, the mass per unit area was measured for three samples across the web. A difference of 50 $g/m^2$ or more, corresponding to a relative deviation of 1.85%, was considered to be a failure.

As can be seen from the data in Table 3, the weight distribution for the three samples of Comparative Example 2 varied greatly and showed values outside of the specified range of 2650 to 2750 $g/m^2$. This result may have been due to the higher level of Fries product in Comparative Example 2, which in turn may have caused a shear thinning effect. However, as is seen in the samples of Example 1, a lower Fries level (2000 ppm) resulted in a more consistent weight distribution.

| Table 3 | | | | | | | | | |
|---|---|---|---|---|---|---|---|---|---|
| | Interfacial | | | Melt | | | Melt | | |
| | Comparative Example 1 | | | Comparative Example 2 | | | Example 1 | | |
| | Sample 1 | Sample 2 | Sample 3 | Sample 1 | Sample 2 | Sample 3 | Sample 1 | Sample 2 | Sample 3 |
| Section | Mass | Mass | Mass | Mass | Mass | Mass | Mass | Mass | Mass |
| 1 | 2741 | 2743 | 2736 | 2933* | 2734* | 2700 | 2720 | 2715 | 2702 |
| 2 | 2731 | 2718 | 2667 | 2687 | 2748 | 2762* | 2700 | 2720 | 2714 |
| 3 | 2689 | 2653 | 2715 | 2578* | 2809* | 2826* | 2663 | 2698 | 2676 |
| 4 | 2715 | 2719 | 2737 | 2591* | 2846* | 2840* | 2741 | 2687 | 2710 |
| 5 | 2680 | 2678 | 2653 | 2498* | 2782* | 2778* | 2651 | 2653 | 2654 |
| 6 | 2659 | 2680 | 2684 | 2532* | 2558* | 2789* | 2681 | 2676 | 2650 |
| 7 | 2681 | 2695 | 2696 | 2732 | 2715 | 2732 | 2653 | 2652 | 2651 |
| 8 | 2742 | 2687 | 2700 | 2746 | 2635* | 2626* | 2717 | 2678 | 2719 |
| 9 | 2687 | 2738 | 2750 | 3003* | 2472* | 2247* | 2724 | 2725 | 2728 |
| mean | 2702.78 | 2701.22 | 2704.22 | 2700.00 | 2699.89 | 2700.00 | 2694.44 | 2689.33 | 2689.33 |

(continued)

| Table 3 | | | | | | | | | |
|---|---|---|---|---|---|---|---|---|---|
| | Interfacial | | | Melt | | | Melt | | |
| | Comparative Example 1 | | | Comparative Example 2 | | | Example 1 | | |
| | Sample 1 | Sample 2 | Sample 3 | Sample 1 | Sample 2 | Sample 3 | Sample 1 | Sample 2 | Sample 3 |
| Section | Mass | Mass | Mass | Mass | Mass | Mass | Mass | Mass | Mass |
| std. dev. | 30.19 | 30.11 | 33.17 | 175.07 | 122.46 | 182.01 | 33.56 | 27.32 | 31.65 |
| rel. std. dev. | 1.12 | 1.11 | 1.23 | 6.48 | 4.54 | 6.74 | 1.25 | 1.02 | 1.18 |
| (*) Failure: A difference of 50 grams or more than target mass of 2700 $g/m^2$ | | | | | | | | | |

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the appended claims.

All cited patents, patent applications, and other references are incorporated herein by reference in their entirety.

## Claims

**1.** A method for producing a multiwall thermoplastic sheet comprising:

extruding a composition comprising a melt polycarbonate resin having a Fries content of 10 ppm to 2000 ppm.

**2.** The method of Claim 1, wherein the melt polycarbonate resin has a Fries content of 50 to 2000 ppm.

**3.** The method of Claim 1, wherein the melt polycarbonate resin has a Fries content of 100 ppm to 1800 ppm.

**4.** The method of Claim 1, wherein the composition comprises greater than or equal to 85 weight percent melt polycarbonate.

**5.** The method of Claim 1, wherein the multiwall thermoplastic sheet comprises a plurality of sections having a relative standard deviation in mass per unit area of less than 2%.

**6.** A multiwall thermoplastic sheet made by the method of Claim 1.

**7.** The multiwall sheet of Claim 6, comprising a plurality of sections having a maximum relative deviation in mass per unit area less than 2%.

## Patentansprüche

**1.** Verfahren zur Herstellung einer mehrwandigen thermoplastischen Platte, bei welchem man:

eine Zusammensetzung extrudiert, welche ein Schmelzpolycarbonatharz umfasst, das einen Friesgehalt von 10 ppm bis 2000 ppm hat.

**2.** Verfahren nach Anspruch 1, wobei das Schmelzpolycarbonatharz einen Friesgehalt von 50 ppm bis 2000 ppm hat.

3. Verfahren nach Anspruch 1, wobei das Schmelzpolycarbonatharz einen Friesgehalt von 100 ppm bis 1800 ppm hat.

4. Verfahren nach Anspruch 1, wobei die Zusammensetzung mehr als oder gleich etwa 85 Gewichtsprozent Schmelzpolycarbonat umfasst.

5. Verfahren nach Anspruch 1, wobei die mehrwandige thermoplastische Platte eine Mehrzahl von Abschnitten umfasst, die eine relative Standardabweichung in Masse pro Flächeneinheit von weniger als 2 % haben.

6. Mehrwandige thermoplastische Platte hergestellt nach dem Verfahren aus Anspruch 1.

7. Mehrwandige Platte nach Anspruch 6, aufweisend eine Mehrzahl von Abschnitten, die eine maximale relative Abweichung in Masse pro Flächeneinheit von weniger als 2 % haben.

## Revendications

1. Procédé de production d'une plaque multiparoi de matière thermoplastique, qui comporte le fait d'extruder une résine polycarbonate fondue contenant 10 à 2000 ppm de motifs réarrangés de Fries.

2. Procédé conforme à la revendication 1, dans lequel la résine polycarbonate fondue contient 50 à 2000 ppm de motifs réarrangés de Fries.

3. Procédé conforme à la revendication 1, dans lequel la résine polycarbonate fondue contient 100 à 1800 ppm de motifs réarrangés de Fries.

4. Procédé conforme à la revendication 1, dans lequel la composition contient au moins 85 % en poids de polycarbonate fondu.

5. Procédé conforme à la revendication 1, dans lequel la plaque multiparoi de matière thermoplastique comporte plusieurs sections entre lesquelles l'écart-type relatif de masse par unité de surface est inférieur à 2 %.

6. Plaque multiparoi de matière thermoplastique, fabriquée selon un procédé conforme à la revendication 1.

7. Plaque multiparoi conforme à la revendication 6, comportant plusieurs sections entre lesquelles l'écart relatif maximal de masse par unité de surface est inférieur à 2 %.